# EUROPÄISCHE PATENTANMELDUNG

(11) **EP 4 737 101 A1**
(43) Veröffentlichungstag der Anmeldung: **06.05.2026**
(21) Anmeldenummer: 25211995.3
(22) Anmeldetag: 29.10.2025
(51) Int. Cl.: B29C 65/14, B29C 65/34, B29C 65/48, B29C 65/50, B64C 99/00, F16B 11/00, B29C 65/54, B29L 31/00, B29K 105/06

(54) **VERFAHREN ZUM FÜGEN VON BAUTEILEN EINES LUFTFAHRZEUGES UND LUFTFAHRZEUG HIERZU**

(30) Priorität: 29.10.2024 DE 102024131500
(71) Anmelder: Deutsches Zentrum für Luft- und Raumfahrt e.V., 53227 Bonn-Oberkassel (DE)
(72) Erfinder: Steffen, Olaf, 22763 Hamburg (DE)
(74) Vertreter: Gramm, Lins & Partner Patent- und Rechtsanwälte PartGmbB

(57) **Zusammenfassung**

Verfahren zum Fügen von Bauteilen (10, 11) eines Luftfahrzeuges, wobei das Verfahren die folgenden Schritte umfasst:

- Bereitstellen eines ersten Bauteils (10) und eines zweiten Bauteils (11) des Luftfahrzeuges,

- Fügen des ersten Bauteils (10) und des zweiten Bauteils (11), wobei bauteilbedingt in einem Fügebereich ein zu erwartender Fügespalt (13) gebildet wird, und

- Auffüllen des gebildeten Fügespaltes (13) mit einer Fügespaltmasse (14),

- wobei ein vorkonfektionierter Polymerbeutel (20) bereitgestellt ist, der mit der nicht-ausgehärteten Fügespaltmasse (14) gefüllt ist, wobei der Polymerbeutel (20) hinsichtlich der Abmessungen und/oder hinsichtlich der Menge der Fügespaltmasse (14) in Abhängigkeit von der erwarteten Größe des Fügespaltes (13) vorkonfektioniert bereitgestellt wird,

- wobei dieser mit der nicht-ausgehärteten Fügespaltmasse (14) gefüllte Polymerbeutel (20) in den gebildeten Fügespalt (13) eingesetzt wird, und

- wobei die Fügespaltmasse (14) in dem Polymerbeutel (20) anschließend ausgehärtet wird.

## Beschreibung

Die Erfindung betrifft ein Verfahren zum Fügen von Bauteilen eines Luftfahrzeuges sowie ein Luftfahrzeug hierzu.

Der Prozess des Shimmings beschreibt das Füllen von Lücken bzw. Fügespalten zwischen aneinander gefügten Bauteilen mit einem Shimmaterial bzw. einer Fügespaltmasse und ist ein Arbeitsschritt der individuellen, einzelteilbezogenen Anpassung. In der Flugzeugfertigung findet dieser Füllprozess zwischen einer Vielzahl von Bauteilen in der Montage statt. Dies betrifft insbesondere Bauteile, die vernietet werden sollen. Der Ausgleich von Lücken zwischen den Bauteilen soll hier Verformungen und Spannungen vermeiden, die sonst im Nietprozess entstehen würden. Dies ist essentiell, da dies ansonsten Lasten in die Struktur einbringen würde, die in der Auslegung bzw. im Design keine oder nur begrenzte Berücksichtigung finden.

Während des Herstellungsprozesses können einzelne Komponenten aufgrund von Toleranzen bei der Bearbeitung, Herstellung oder anderen Prozessen leichte Abweichungen in den Abmessungen aufweisen. Diese Abweichungen können sich beim Zusammenbau komplexer Strukturen kumulieren und zu Fehlausrichtungen oder Lücken führen, die korrigiert werden müssen.

Abweichungen an Einzelkomponenten können nicht nur die Größe betreffen, sondern auch die Form. Insbesondere bei Faserverbundbauteilen, die aus einem Faserverbundwerkstoff aufweisend ein Fasermaterial und ein das Fasermaterial einbettendes Matrixmaterial hergestellt sind, können als Resultat von Fertigungsprozessen auch Fügeflächen entstehen, deren Oberflächenstruktur inhärent variiert und daher im Zusammenbau mit anderen Teilen gefüllt werden müssen. Dies ist bei allen Vakuumsack-Verfahren mit offenem Formwerkzeug oftmals der Fall.

Durch Shimming werden all diese Unregelmäßigkeiten und Abweichungen im Fügespalt zwischen zu montierenden Bauteilen ausgeglichen. In der Praxis werden die Bauteile dabei zunächst in einen vorläufigen Zusammenbau zusammengeführt und die zu fühlenden Lücken bzw. Fügespalte zwischen den Bauteilen geprüft. Abhängig vom Material der Bauteile und der Größe des Fügespaltes kann das Material der Fügespaltmasse bzw. des Shimmaterials variieren.

Im Faserverbundleichtbau, bei dem zwei Bauteile aus einem Faserverbundwerkstoff miteinander gefügt werden sollen, wird zwischen "liquid shim" und "hard shim" unterschieden. "Liquid Shim" besteht dabei in der Regel aus einem gießbaren, meist zähflüssigen Material, das im flüssigen Zustand aufgetragen wird. Der Einsatz von zwei-Komponenten Duromermaterialien ist hier üblich.

In der Praxis wird die Fügespaltmasse (Shimmasse) aufgebracht, indem das flüssige Material in die Lücken bzw. in den Fügespalt zwischen den Bauteilen, die angepasst werden müssen, gegossen oder gespritzt wird oder vor dem Fügen auf eins der Bauteile aufgetragen wird. Die Bauteile können dabei entweder auf eine Klebung vorbereitet werden oder mit Trennmittel behandelt werden, wenn eine Demontagemöglichkeit vorgesehen sein muss. Die Fügespaltmasse passt sich dabei der Form der Bauteile an und füllt Hohlräume und Unregelmäßigkeiten aus. Die flüssige Fügespaltmasse benötigt in der Regel eine Aushärteprozesses, um sich zu verfestigen, wobei die Aushärtezeit je nach verwendetem Material variiert.

Die Nutzung von Fügespaltmassen bzw. die Technik des Shimmens ist in der gegenwärtigen Luftfahrzeugfertigung und auch bei zukünftigen neuen Programmen notwendig, um sichere und reproduzierbare Verbindungen herzustellen. Die damit einhergehenden Nachteile, die sich auf den gesamten Montageprozess und damit auf das Flugzeug auf Systemebene auswirken können, müssen dabei derzeit noch in Kauf genommen werden.

Ein Nachteil hierbei ist, dass es sich um einen sehr zeitaufwendigen Prozess handelt, da die Bauteile mehrfach ausgerichtet werden müssen. Insbesondere bei großen und komplexen Strukturen in der Luft- und Raumfahrt ist die sehr zeitaufwendig. Auch die Aushärtezeiten der Fügespaltmasse ist hierbei nicht zu unterschätzen und kann dazu führen, dass Montagearbeiten an einer Baugruppe über mehrere Tage aus diesem Grund gestreckt werden müssen.

Vor diesem Hintergrund ist es Aufgabe der vorliegenden Erfindung ein verbessertes Montageverfahren anzugeben, mit dem zwei Bauteile eines Luftfahrzeuges schnell und prozesssicher miteinander verbunden werden können.

Die Aufgabe wird mit dem Verfahren zum Fügen von Bauteilen gemäß Anspruch 1 erfindungsgemäß gelöst. Vorteilhafte Ausgestaltungen der Erfindung finden sich dann in den entsprechenden Unteransprüchen

Gemäß Anspruch 1 wird ein Verfahren zum Fügen von Bauteilen eines Luftfahrzeuges vorgeschlagen, wobei das Verfahren gattungsgemäß umfasst:
- Bereitstellen eines ersten Bauteils und eines zweiten Bauteils des Luftfahrzeuges,
- Fügen des ersten Bauteils und des zweiten Bauteils, wobei bauteilbedingt in einem Fügebereich ein zu erwartender Fügespalt gebildet wird, und
- Auffüllen des gebildeten Fügespaltes mit einer Fügespaltmasse.

Gattungsgemäß wird demnach bei dem Verfahren zum Fügen von Bauteilen eines Luftfahrzeuges zunächst mindestens zwei Bauteile bereitgestellt, die in einem Montageprozess zusammengefügt werden sollen. Nach dem Bereitstellen der Bauteile werden nun die beiden Bauteile gefügt, wobei bauteilbedingt in einem Fügebereich ein zu erwartender Fügespalt gebildet wird. Das Fügen der Bauteile kann auch einen vorläufigen Zusammenbau bzw. ein Positionieren der Bauteile zueinander umfassen. Anschließend wird der gebildete Fügespalt mit einer Fügespaltmasse aufgefüllt.

Der Fügebereich, in dem die Fügespaltmasse eingesetzt wird, ist dabei derjenige Bereich, bei dem die beiden Bauteile mittels der Fügespaltmasse zusammengefügt sind. Durch das Aushärten der Fügespaltmasse entsteht dadurch eine feste Positionierung der beiden Bauteile zueinander, wobei vorgesehen sein kann, dass die beiden Bauteile an weiteren Montagebereichen mit Befestigungsmitteln miteinander verbunden werden. Solche Befestigungsmittel beispielsweise Schrauben, Bolzen oder Nieten sein.

Erfindungsgemäß ist nun vorgesehen, dass ein vorkonfektionierter Polymerbeutel bereitgestellt ist, der mit der nicht-ausgehärteten Fügespaltmasse gefüllt ist, wobei der Polymerbeutel hinsichtlich der Abmessungen und/oder hinsichtlich der Menge der Fügespaltmasse in Abhängigkeit von der erwarteten Größe des Fügespaltes vorkonfektioniert bereitgestellt wird,, dass dieser mit der nicht-ausgehärteten Fügespaltmasse gefüllte Polymerbeutel in den gebildeten Fügespalt eingesetzt wird, und dass die Fügespaltmasse in dem Polymerbeutel anschließend ausgehärtet wird.

Um den Montageprozess und somit insbesondere auch den Teilprozess des Shimmings zu vereinfachen, wird in den erwarteten Fügespalt ein vorkonfektionierter Polymerbeutel eingesetzt. Dieser vorkonfektionierte Polymerbeutel weist dabei Abmessungen auf, die der Größe des zu erwartenden Fügespaltes entspricht, und/oder eine Menge an Fügespaltmasse auf, die der Größe und dem daraus ableitbaren Volumen des zu erwartenden Fügespaltes entspricht. Dies meint nicht zwangsläufig, dass der Polymerbeutel exakt die Abmessungen und/oder exakt die Menge an Fügespaltmasse des erwartenden Fügespaltes aufweist, da der Polymerbeutel mit der Fügespaltmasse verformbar ist und somit an die Form und Kontur des Fügespaltes angepasst werden kann. Vielmehr ist der Polymerbeutel insoweit vorkonfektioniert, als dass er in den erwarteten Fügespalt, dessen Abmessungen innerhalb einer gewissen Toleranz (aufgrund von Fertigungstoleranzen der Bauteile) schwanken, eingesetzt werden kann. Durch das Einsetzen des vorkonfektionierten Polymerbeutels wird somit der Fügespalt, vorzugsweise vollständig, durch dem Polymerbeutel und die darin enthaltene Fügespaltmasse besetzt.

Die so bereitgestellten und vorkonfektionierten Polymerbeutel mit der Fügespaltmasse können nun direkt in den Fügespalt eingesetzt und an die Fügeflächen der beiden Bauteile angelegt werden. Da der Polymerbeutel und darin enthaltene Fügespaltmasse plastisch verformbar ist, kann die Fügespaltmasse zusammen mit dem Polymerbeutel die Form und Kontur der Fügeflächen der beiden Bauteile annehmen und so einen mechanisch einwandfreien Lastweg bilden, wenn die Fügespaltmasse ausgehärtet ist.

Nach dem Einsetzen des Polymerbeutels mit der Fügespaltmasse wird nun die Fügespaltmasse in dem Polymerbeutel ausgehärtet, sodass nach dem Aushärten der Fügespaltmasse der vorkonfektionierte Polymerbeutel mit der darin enthaltenen ausgehärteten Fügespaltmasse in den Fügespalt verbleibt.

Aufgrund der Tatsache, dass die Fügespaltmasse mit dem Polymerbeutel vorkonfektioniert bereitgestellt wird, entfällt die erforderliche Zeit zum Bestimmen der Menge und des Ausmessen des notwendigen Volumens. Personal keine der gewonnenen Zeit andere Aufgaben übernehmen. Durch die Bereitstellung in sofort nutzbarer Konfiguration entfällt der Mischvorgang, sodass eine fehlerhafte Herstellung der Fügespaltmasse (stöchiometrisches Verhältnis) oder unzureichende Durchmischung der Komponenten vermieden wird. Außerdem kann eine über schlüssig hergestellte Restmenge an der Fügespaltmasse aufgrund der Vorkonfektionierung vermieden werden. Somit kann einer Kosteneinsparung aufgrund von Reduktion von Materialverschwendung, Einsparung von Arbeitszeit und signifikanter Prozessbeschleunigung erreicht werden.

Gemäß einer Ausführungsform ist vorgesehen, dass die in den Polymerbeutel gefüllte Fügespaltmasse eine im nicht-ausgehärteten Zustand flüssige, pastöse oder zumindest nicht-feste Füllmasse ist.

Zusammen mit dem Polymerbeutel, der ebenfalls im nicht-festen Zustand vorliegt und plastisch verformbar ist, kann die gesamte Konfiguration mit Polymerbeutel und darin enthaltener Fügespaltmasse plastisch verformt werden und so an die Fügeflächen der Bauteile weitgehend exakt angepasst werden.

Gemäß einer Ausführungsform ist vorgesehen, dass die in den Polymerbeutel gefüllte Fügespaltmasse ein Duromerkunststoff ist, enthält oder aus einem solchen besteht und/oder dass der Polymerbeutel einen Duromerkunststoff aufweist oder aus einem solchen gebildet ist.

Dabei ist es besonders vorteilhaft, wenn der Duromerkunststoff der Fügespaltmasse ein temperaturaktivierbares System darstellt, sodass durch Temperierung der Fügespaltmasse diese entsprechend ausgehärtet werden kann.

Gemäß einer Ausführungsform ist vorgesehen, dass der Polymerbeutel derart bereitgestellt wird, dass an der Außenseite des Polymerbeutels zumindest teilweise eine Klebstoffschicht angeordnet ist, die nach dem Aushärten der Fügespaltmasse mit zumindest einem der Bauteile eine Klebstoffverbindung eingeht.

In dieser Ausführungsform weist der Polymerbeutel eine Klebstoffschicht auf, die nach dem Aushärten der Fügespaltmasse mit einer der Fügeflächen zumindest einer der Bauteile eine Klebstoffverbindung eingeht, sodass die ausgehärtete Fügespaltmasse klebend in dem Fügespalt eingesetzt ist und dort verbleibt. Hierdurch kann ein Verrutschen der Fügespaltmasse im Betrieb des Luftfahrzeuges vermieden werden.

Vorzugsweise dabei vorgesehen, dass der Polymerbeutel seiner gesamten Außenseite mit der Klebstoffschicht versehen ist, sodass die Klebstoffverbindung nach dem Aushärten der Fügespaltmasse sowohl einem ersten als auch in den zweiten Bauteil entsteht.

Alternativ oder zusätzlich kann auch vorgesehen sein, dass die Fügefläche zumindest eines der Bauteile, vorzugsweise beider Bauteile, mit einer Klebstoffschicht versehen wird, bevor der vorkonfektionierte Polymerbeutel mit der Fügespaltmasse in den Fügespalt eingesetzt wird. Allerdings wäre hierfür ein weiterer Prozessschritt notwendig, der durch das Anbringen einer Klebstoffschicht an der Außenseite des Polymerbeutels vermieden werden kann, da hierdurch ein vorkonfektioniertes Halbzeug bereitgestellt wird.

Gemäß einer Ausführungsform ist vorgesehen, dass der mit der Fügespaltmasse gefüllte Polymerbeutel nach dem Einsetzen in den Fügespalt mittels einer elektrischen Heizeinrichtung temperiert wird, sodass die Fügespaltmasse unter Einbringen von thermischer Energie aushärtet.

Hierdurch wird es möglich, die Fügespaltmasse, die insbesondere thermisch aushärtbar ist, auf die notwendige Prozesstemperatur zu temperieren, sodass der Aushärtevorgang beschleunigt werden kann. Hierdurch wird die Aushärtezeit verkürzt, was sich in einer Verringerung der gesamten Prozesszeit niederschlägt. Durch die Verwendung einer elektrischen Heizeinrichtung, bei der elektrische Energie in thermischer Energie umgewandelt wird, kann darüber hinaus eine einfache und unkomplizierte Temperierung bei minimalem Anlagenaufwand erreicht werden.

Gemäß einer Ausführungsform ist vorgesehen, dass ein Polymerbeutel mit mindestens einem Heizdraht als Heizeinrichtung bereitgestellt wird, die mit einer elektrischen Energiequelle zur Bildung einer elektrische Widerstandsheizeinrichtung verbunden wird, um die in dem Polymerbeutel enthaltene Fügespaltmasse zu temperieren, sodass die Fügespaltmasse unter Einbringen von thermischer Energie aushärtet.

Hierbei ist insbesondere vorgesehen, dass die elektrischen Leitungen zum Verbinden des Heizdrahtes an einer Stelle aus dem Polymerbeutel herausgeführt und insbesondere mit einem elektrischen Verbindungselement verbunden sind, sodass der Polymerbeutel neben der Fügespaltmasse und dem Heizdraht auch ein elektrisches Verbindungselement, beispielsweise einen elektrischen Steckverbinder, aufweist. Über dieses elektrische Verbindungselement kann der Polymerbeutel mit einer elektrischen Energiequelle verbunden werden, sodass ein elektrischer Stromfluss in dem Heizdraht erzeugt werden kann, der aufgrund des elektrischen Widerstandes des Heizdrahtes in thermischer Energie umgewandelt wird.

Ein solches elektrisches Verbindungselement kann dabei ein standardisierter Stecker, wie er in industriellen Anwendungen sowohl im Großen als auch im Kleinen oftmals zu finden ist, sein.

Das elektrische Verbindungselement kann dabei so vorgesehen sein, dass nach dem Aushärten der Fügespaltmasse dieses von dem Polymerbeutel entfernt werden kann, beispielsweise durch Aufbringen von Kraft, sodass ausschließlich der Polymerbeutel mit der ausgehärteten Fügespaltmasse in den Fügespalt verbleibt.

Wird in dem elektrischen Heizdraht ein elektrischer Stromfluss bewirkt, so erwärmt sich der Heizdraht aufgrund des elektrischen Widerstandes in Art einer elektrischen Widerstandsheizung, wodurch die in dem Polymerbeutel befindliche Fügespaltmasse erwärmt und insbesondere auf die bevorzugte Prozesstemperatur temperiert wird.

Hierdurch wird es möglich, eine vorkonfektionierten Polymerbeutel mit einer Fügespaltmasse und einer integrierten elektrischen Heizeinrichtung bereitzustellen, sodass sowohl das Einbringen der Fügespaltmasse in den Fügespalt als auch das Aushärten der Fügespaltmasse in dem Fügespalt derart vereinfacht wird, dass die Montagezeit signifikant reduziert werden kann.

Gemäß einer Ausführungsform ist vorgesehen, dass der Polymerbeutel derart bereitgestellt wird, dass der mindestens eine Heizdraht in der in dem Polymerbeutel befindlichen Fügespaltmasse eingebettet ist und nach dem Aushärten der Fügespaltmasse eingebettet in dieser verbleibt.

Der Heizdraht wird dabei vorzugsweise vollständig von der Fügespaltmasse umschlossen und in dieser eingebettet. Dabei kann vorgesehen sein, dass das elektrische Verbindungselement, welches mit den elektrischen Leitungen des Heizdrahtes zur Verbindung mit einer elektrischen Energiequelle verbunden ist, nach dem Aushärten der Fügespaltmasse abgetrennt werden kann, sodass ausschließlich der Polymerbeutel mit der ausgehärteten Fügespaltmasse und dem darin eingebetteten Heizdraht in dem Fügespalt verbleibt.

Gemäß einer Ausführungsform ist vorgesehen, dass in dem Polymerbeutel eine Heizdrahtträgerlage zur Stützung des Heizdrahtes vorgesehen ist.

Hierbei ist vorzugsweise der Heizdraht direkt an der Heizdrahtträgerlage angeordnet, um die Position des Heizdrahtes innerhalb des Polymerbeutels sicher zu stellen. Hierdurch kann verhindert werden, dass der Heizdraht bei Verwendung des Polymerbeutels verrutscht und somit die Fügespaltmasse ungleichmäßig temperiert oder dass es zu Kurzschlüssen innerhalb des Polymerbeutels kommt.

Die Heizdrahtträgerlage stützt somit den Heizdraht und hält ihn innerhalb der Fügespaltmasse im Polymerbeutel an der gewünschten Position. Die Heizdrahtträgerlage kann dabei an mindestens einem Ende des Polymerbeutels befestigt sein, sodass die Heizdrahtträgerlage innerhalb der Fügespaltmasse im Polymerbeutel an der gewünschten Position gehalten wird.

Die Heizdrahtträgerlage kann aus einem Gewebe, einem Vlies (bspw. einem Wirrfaserflies), einem (großmaschigen) Netz oder aus Materialsträngen bestehen bzw. aufweisen.

Demnach wird ein Polymerbeutel mit mindestens einem Heizdraht als eine elektrische Heizeinrichtung und einer Heizdrahtträgerlage zur Stützung des Heizdrahtes bereitgestellt wird, wobei der mindestens eine Heizdraht mit einer elektrischen Energiequelle zur Bildung einer elektrischen Widerstandsheizeinrichtung verbunden wird, um die in dem Polymerbeutel enthaltene Fügespaltmasse zu temperieren, sodass die Fügespaltmasse unter Einbringen von thermischer Energie aushärtet.

Der Heizdraht ist dabei vorzugsweise an der Heizdrahtträgerlage angeordnet und daran befestigt.

Gemäß einer Ausführungsform ist vorgesehen, dass der Polymerbeutel derart bereitgestellt wird, dass der mindestens eine Heizdraht in oder an dem Material des Polymerbeutels selbst vorgesehen ist und nach dem Aushärten der Fügespaltmasse in oder an dem Polymerbeutel verbleibt.

In dieser Ausführungsform wird der Heizdraht nicht in der Fügespaltmasse eingebettet, an dem die Fügespaltmasse ausgehärtet ist, sondern der Heizdraht ist Bestandteil des Polymerbeutels, genauer gesagt des Materials des Polymerbeutels. Dies kann dadurch erreicht werden, dass der Heizdraht in das Material des Polymerbeutels eingebettet ist oder an der Innenseite/Außenseite des Polymerbeutels aufgebracht wurde (beispielsweise durch eine 3D- Druckvorgang).

Gemäß einer Ausführungsform ist vorgesehen, dass ein Polymerbeutel mit mindestens einer UV-Diode (als Heizeinrichtung) bereitgestellt wird, die mit einer elektrischen Energiequelle zum Aussenden von UV-Licht verbunden wird, um die in dem Polymerbeutel enthaltene Fügespaltmasse durch Einwirkung des ausgesendeten UV-Lichts auszuhärten.

In dieser Ausführungsform wird anstelle eines Heizdrahtes eine UV-Diode verwendet, die bei Zuführung elektrische Energie UV-Licht ausstrahlt. Hierbei ist insbesondere vorgesehen, dass die elektrischen Leitungen zum Verbinden der UV-Diode an einer Stelle aus dem Polymerbeutel herausgeführt und insbesondere mit einem elektrischen Verbindungselement verbunden sind, sodass der Polymerbeutel neben der Fügespaltmasse und der UV-Diode auch ein elektrisches Verbindungselement, beispielsweise einen elektrischen Steckverbinder, aufweist. Über dieses elektrische Verbindungselement kann der Polymerbeutel mit einer elektrischen Energiequelle verbunden werden, sodass die UV-Diode mit elektrischer Energie versorgt werden kann. Diese wandelt elektrische Energie in UV-nicht um, umso die Fügespaltmasse durch Einwirkung des UV-Lichtes auszuhärten.

Bei dieser Ausführungsform wird eine Fügespaltmasse verwendet, bei der es sich um ein durch UV-Strahlung aktivierbares System handelt.

Ein solches elektrisches Verbindungselement kann dabei ein standardisierter Stecker, wie er in industriellen Anwendungen sowohl im Großen als auch im Kleinen oftmals zu finden ist, sein.

Das elektrische Verbindungselement kann dabei so vorgesehen sein, dass nach dem Aushärten der Fügespaltmasse dieses von dem Polymerbeutel entfernt werden kann, beispielsweise durch Aufbringen von Kraft, sodass ausschließlich der Polymerbeutel mit der ausgehärteten Fügespaltmasse in den Fügespalt verbleibt.

Gemäß einer Ausführungsform ist vorgesehen, dass der Polymerbeutel derart bereitgestellt wird, dass die mindestens eine UV-Diode in der in dem Polymerbeutel befindlichen Fügespaltmasse eingebettet ist und nach dem Aushärten der Fügespaltmasse eingebettet in dieser verbleibt.

Die UV-Diode wird dabei vorzugsweise vollständig von der Fügespaltmasse umschlossen und in dieser eingebettet. Dabei kann vorgesehen sein, dass das elektrische Verbindungselement, welches mit den elektrischen Leitungen der UV-Diode zur Verbindung mit einer elektrischen Energiequelle verbunden ist, nach dem Aushärten der Fügespaltmasse abgetrennt werden kann, sodass ausschließlich der Polymerbeutel mit der ausgehärteten Fügespaltmasse und der darin eingebetteten UV-Diode in dem Fügespalt verbleibt.

Mit einer Ausführungsform ist vorgesehen, dass die Heizeinrichtung über einen Stecker mit einem Handgerät verbunden ist oder wird, wobei das Handgerät durch Steuerung des elektrischen Stromflusses in der elektrischen Heizeinrichtung den Energieeintrag in die Fügespaltmasse einstellt.

So ist es denkbar, dass das Handgerät ebenfalls ein elektrisches Verbindungselement hat, welches korrespondierend zu dem elektrischen Verbindungselement des Polymerbeutels ist, sodass der Heizdraht oder die UV-Diode mit dem Handgerät verbunden werden können. Durch das elektrische Verbindungselement des Handgerätes und dem elektrischen Verbindungselement des Polymerbeutels wird eine elektrische Verbindungsanordnung geschaffen, um die in dem Polymerbeutel eingebettete elektrische Heizeinrichtung mit elektrischer Energie versorgen zu können und diese entsprechend ansteuern zu können.

Das Handgerät kann dabei eingerichtet sein, die elektrische Heizeinrichtung so anzusteuern, dass die Fügespaltmasse in dem Polymerbeutel bestmöglich auf die erforderliche Prozesstemperatur temperiert wird. Hierbei werden insbesondere Parameter wie Heizleistung, Heizzeitraum sowie mögliche Temperprozesse in dem Handgerät hinterlegt.

Es kann außerdem vorgesehen sein, dass der Stecker entsprechende Gebindeinformationen an das Handgerät sendet, beispielsweise über die gebildete elektrische Verbindungsanordnung, um so eine optimale Ansteuerung der elektrischen Heizeinrichtung durch das Handgerät zu erreichen. Solche Gebindeinformationen umfassen dabei beispielsweise das auszuhärtende Volumen der Fügespaltmasse sowie das Material der Fügespaltmasse und/oder die gewünschten Prozesstemperatur, sodass Heizleistung und Heizzeitraum von dem Handgerät automatisch eingestellt werden können.

Gemäß einer Ausführungsform ist vorgesehen, dass der Polymerbeutel derart bereitgestellt wird, dass mindestens eine Fasermateriallage in dem Polymerbeutel zusammen mit der Fügespaltmasse vorgesehen ist.

Eine solche Fasermateriallage kann beispielsweise eine Glasfaserlage oder eine Kohlenstofffaserlage sein. Denkbar ist auch, dass mehrere übereinanderliegende Fasermateriallagen in dem Polymerbeutel vorgesehen sind. Denkbar ist des Weiteren, dass ein Hybridgelege vorgesehen ist, das aus mindestens einer Glasfaserlage und mindestens einer Kohlenstofffaserlage besteht.

Vorzugsweise verbleibende die Fasermateriallagen in dem Polymerbeutel zusammen mit der ausgehärteten Fügespaltmasse und bilden so eine in-situ gefertigten "hard-shim" Einleger.

Die Erfindung wird anhand der beigefügten Figuren beispielhaft näher erläutert. Es zeigen:
- Figur 1: schematische Darstellungen des Einsatzes von Fügespaltmasse gemäß dem Stand der Technik;
- Figur 2: schematische Darstellung eines vorkonfektionierten Polymerbeutels mit Heizdraht;
- Figur 3: schematische Darstellung eines vorkonfektionierten Polymerbeutels mit Heizdraht in einer weiteren Ausführungsform;
- Figur 4: schematische Darstellung eines vorkonfektionierten Polymerbeutels mit UV-Diode;
- Figur 5: schematische Darstellung eines Handgerätes, Polymerbeutels und elektrischer Verbindungsanordnung zwischen beiden.

Gleiche Bezugszeichen kennzeichnen dabei im Wesentlichen gleiche Elemente, auch wenn es sich gegebenenfalls um unterschiedliche Bauteile oder Ausführungsformen handelt.

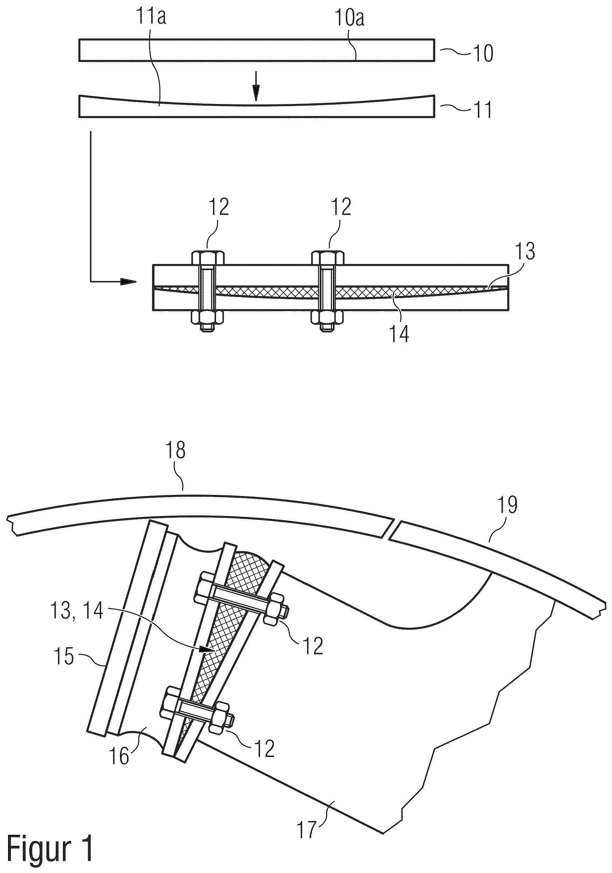

Für eine zeigt in einer schematisch stark vereinfachten Darstellung den Einsatz von Fügespaltmasse gemäß dem Stand der Technik. In der oberen Abbildung a) der Figur 1 ist gezeigt, wie ein erstes Bauteil 10 und ein zweites Bauteil 11 mithilfe von Schrauben 12 zusammengesetzt werden sollen. Das erste Bauteil 10 hat dabei eine Fügefläche 10a, während das zweite Bauteil 11 ebenfalls eine Fügeoberfläche 11a hat. Die Fügeoberfläche 11a des zweiten Bauteils 11 ist dabei konkav und nach innen gewölbt, sodass beim Fügen der beiden Bauteile 10, 11 derart, dass sich ihre jeweiligen Fügeflächen 10a, 11a gegenüberliegen, ein Fügespalt 13 zwischen den Bauteilen 10, 11 gebildet wird. Würden nun die Schrauben 12 quer durch die Fügeflächen durchgeführt, so bestünde die Gefahr, dass eines der beiden Bauteile 10, 11 beschädigt wird, da sich nunmehr eine mechanische Spannung aufgrund des Fügespaltes 13 ausbilden würden.

Aus diesem Grund wird in den gebildeten Fügespalt 13 eine Fügespaltmasse 14 eingesetzt, die nach dem Aushärten fest ist und mechanische Spannungen bzw. Lasten abtragen kann. Nunmehr können problemlos die Schrauben 12 durch die beiden Bauteile 10, 11 hindurchgeführt werden war diese miteinander zu verbinden.

In der unteren Abbildung b) der Figur eines ist ein Teil einer Vorflügelanbindung gezeigt. An einem Vorderholm 15 eines nicht weiter dargestellten Flügelkastens eines Flügels ist eine Rippenaufnahme 16 angeordnet, an die eine Vorflügelrippe 17 mithilfe von Schrauben 12 befestigt werden soll. An dem Vorderholm 15 des Flügelkastens ist eine Flügelkastenschale 18 angeordnet, die zusammen mit der Vorflügelschale 19 eine gemeinsame äußere Strömungsoberfläche des Flügels bilden.

Aufgrund von Fertigungstoleranzen ist die Anbindung der Vorflügelrippe 17 an die Rippenaufnahme 16 nicht spaltfrei und nicht spielfrei, sodass ich beim Fügen der Vorflügelrippe 17 des Vorflügels an die Rippenaufnahme 16 ein Fügespalt 13 ausbildet. Würden nun die Schrauben 12 eingesetzt und angezogen, so würden mechanische Spannungen in den Flügeln entstehen, die zu einer Beschädigung der Bauteile führen können.

Aus diesem Grund wird in den Fügespalt 13 eine Fügespaltmasse 14 eingesetzt, die nach dem Aushärten den entstandenen Fügespalt 13 zwischen Vorflügelrippe 17 und Rippenaufnahme 16 besetzt und so eine spaltfrei und spielfreie Montage der Vorflügelrippe 17 ermöglicht.

Das Einfüllen bzw. Auffüllen der Fügespaltmasse in den Fügespalt ist jedoch zeitaufwendig und nicht automatisierbar.

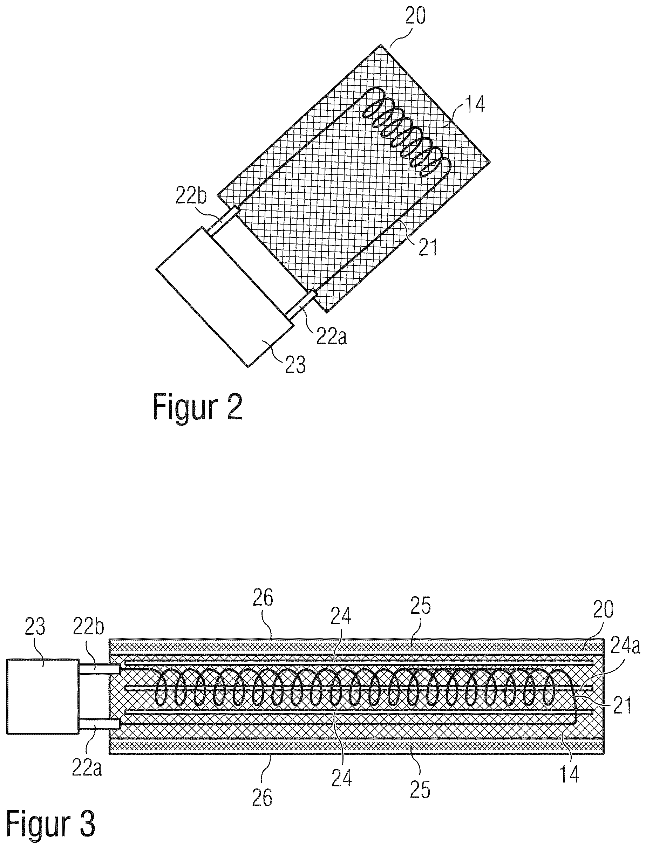

Figur 2 zeigt zur Lösung des Problems eine Polymerbeutel 20 der aus einem Polymermaterial, beispielsweise eine Duromerkunststoff, gebildet ist. Der Polymerbeutel 20 ist dabei hinsichtlich der Abmessungen des zu erwartenden Fügespaltes 13 vorkonfektioniert, d. h. der Polymerbeutel 20 weist in seinen 3 Raumrichtungen eine Abmessung auf, die im Wesentlichen der Größe des zu erwartenden Fügespaltes 13 entspricht.

Der Polymerbeutel 20 ist mit einer Fügespaltmasse 14 gefüllt, die hinsichtlich der Menge ebenfalls vorkonfektioniert ist. Somit sind im Ausführungsbeispiel der Figur 2 sowohl die Abmessungen des Polymerbeutels 20 als auch die Menge an Fügespaltmasse 14 vorkonfektioniert, wobei die Vorkonfektionierung in Abhängigkeit von dem zu erwartenden Fügespaltes 13 und seiner Größe erfolgt. In der Praxis schwankt die Größe des Fügespaltes jedoch, und zwar im Rahmen der Fertigungstoleranzen der einzelnen Bauteile, sodass durch die Verformbarkeit des Polymerbeutels 20 und der noch nicht ausgehärteten Fügespaltmasse 14 die Form der Fügespaltmasse 14 an den Fügespalt 13 angepasst werden kann, sodass dieser vollständig besetzt wird.

In dem Polymerbeutel 20 und der darin enthaltenen Fügespaltmasse 14 befindet sich eine elektrische Heizeinrichtung in Form eines Heizdrahtes 21, der in Art einer elektrischen Widerstandsheizung die Fügespaltmasse 14 in dem Polymerbeutel 20 erwärmen kann. Der Heizdraht 21 ist an seinen beiden Enden mit elektrischen Leitungen 22 verbunden, die eine einem elektrischen Verbindungselement 23 verbunden sind.

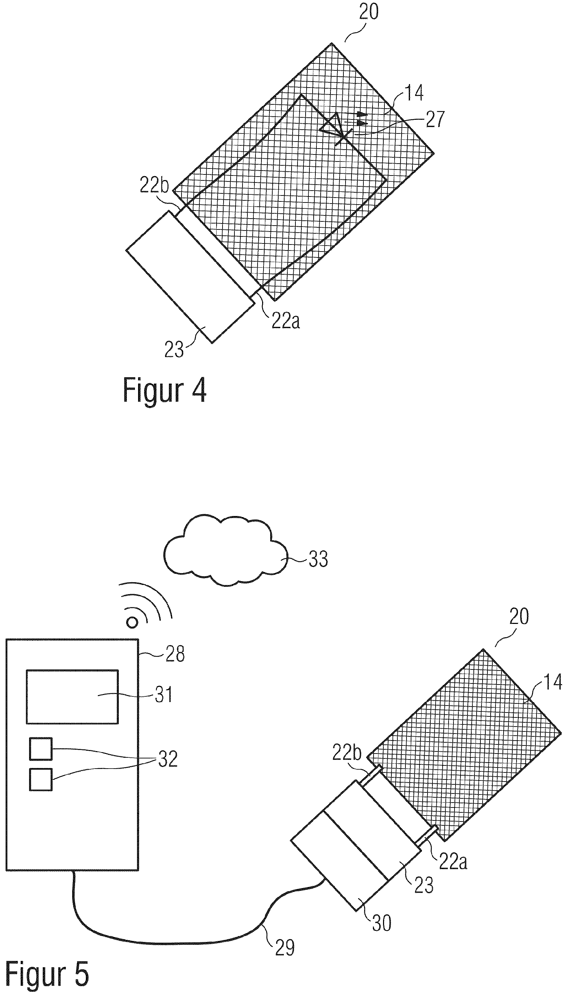

Mithilfe des elektrischen Verbindungselementes 23 kann der Polymerbeutel 20 mit einer elektrischen Energiequelle (siehe Figur 5) verbunden werden, sodass der Heizdraht 21 mit elektrischer Energie versorgt werden kann. Aufgrund des elektrischen Widerstandes des Heizdrahtes 21 erwärmen dieser sich dabei und temperiert so die Fügespaltmasse 14.

In Figur 3 ist ein vorkonfektionierter Polymerbeutel 20 mit einer Fügespaltmasse 14 gezeigt, der wie in Figur 2 einen Heizdraht 21, elektrische Leitungen 22 und ein elektrisches Verbindungselement 23 hat.

Anders als in Figur 2 befindet sich in dem Polymerbeutel 20 des Weiteren ein Hybridgelege 24, welches aus Glasfaser- und/oder Kohlenstofffaserlagen gebildet ist. Außerdem kann eine Heizdrahtträgerlage 24a vorgesehen sein, die vorzugsweise aus einem Glasfasermaterial gebildet ist und den Heizdraht 21 stützen soll. Das hybridgelegene 24 verbleibt dabei nach dem Aushärten der Fügespaltmasse 14 in dem Beutel 20 und somit auch in den Fügespalt 13 und kann so eine weitere stabilisierende Wirkung erzielen.

An der Außenseite des Polymerbeutels 20 eine Klebstoffschicht 25 vorgesehen sein, um den Polymerbeutel 20 in dem Fügespalt zu verkleben und eine Klebverbindung mit den Fügeflächen zu erzielen. Für den sicheren Transport und die Lagerung kann der vorkonfektionierte Polymerbeutel 20 darüber hinaus eine Abdeckfolie 26 aufweisen, welche Klebstoffschicht 25 schützt und Vorbenutzung des Polymerbeutels 20 abgezogen wird. Bei der Klebstoffschicht 25 handelt es sich dabei um eine zusätzliche Ausführungsform.

In beiden Ausführungsformen mit und ohne Klebstoffschicht kann alternativ ergänzt werden, dass die ausgehärtete Fügespaltmasse 14 im Beutel nach dem Aushärten aus dem Fügespalt entnommen und nach Auftrag einer dünnen Klebeschicht wieder eingefügt wird. Auch hier wäre ein Zeitgewinn zu erzielen, da Montagevorgänge erfolgen könnten, ohne dass die Fügespaltmasse durch Verbindungskräfte aus dem Spalt verdrängt wird. Die nachträglich aufgetragene Klebung sichert die Füllmasse gegen Bewegung im Betrieb.

Figur 4 zeigte einer Ausführungsform, bei der anstelle eines Heizdraht deswegen Figur 2 und 3 eine UV-Diode 27 vorgesehen ist. Auch diese wird über eine elektrische Leitungen 22 mit einem elektrischen Verbindungselement 23 verbunden, sodass die UV-Diode 27 mit elektrischer Energie versorgt werden kann, wenn das elektrische Verbindungselement 23 eine Verbindungsanordnung mit einer elektrischen Energiequelle eingeht.

Figur 5 zeigt eine schematische Darstellung der Benutzung des vorkonfektionierten Polymerbeutels 20 mit der darin gefüllten Fügespaltmasse 14. Die in dem Polymerbeutel 20 befindliche elektrische Heizeinrichtung kann ein Heizdraht oder eine UV-Diode sein, wie in den vorstehenden Figuren beschrieben. An einem Ende des Polymerbeutels 20 werden dabei die bereits beschriebenen elektrischen Leitungen 22 herausgeführt und mit einem ersten elektrischen Verbindungselement 23 kontaktiert.

Es wird des Weiteren ein Handgerät 28 bereitgestellt, das ebenfalls eine elektrische Leitung 29 hat, die mit einem zweiten elektrischen Verbindungselement 30 kontaktiert ist.

Wird nun das erste elektrische Verbindungselement 23 mit den zweiten elektrischen Verbindungselement 30 des Handgerätes 28 verbunden, so wird eine elektrische Verbindungsanordnung erzeugt, mit der die in dem Polymerbeutel 20 befindliche elektrische Heizeinrichtung mit dem Handgerät 28 elektrisch verbunden wird. Die Verbindungsanordnung kann dabei eine elektrische Steckverbindung sein.

Das Handgerät weist ein Display 31 auf, auf dem entsprechende Informationen für die Steuerung der elektrischen Heizeinrichtung angezeigt werden können. Außerdem hat das Handgerät 28 Bedienelementes 32, um in die Steuerung der elektrischen Heizeinrichtung eingreifen zu können. Darüber hinaus kann das Handgerät mit einem Cloudspeicher 33 kommunizieren, um so beispielsweise wie remote gespeicherte Prozessinformationen abrufen zu können oder dort ablegen zu können.

Das Handgerät 28 stellt dabei die für die elektrische Heizeinrichtung in dem Polymerbeutel 20 notwendige elektrische Energie zur Verfügung, um die Fügespaltmasse 14 entsprechend auf die notwendige Prozesstemperatur zu temperieren.

Hierfür weist das Handgerät 28 intern eine elektronische Regeleinrichtung auf, um gezielt die notwendige elektrische Energie bereitzustellen. Dabei kann die elektronische Regeleinrichtung einen oder mehrere Heizparameter ermitteln, die für den Heizvorgang erforderlich sind. So kann beispielsweise erkannt werden, welche Art von Fügespaltmasse und/oder welche Menge an Fügespaltmasse verwendet wird, umso ein entsprechendes Leistungsbereitstellungsprofil mit den notwendigen Heizparameter zur Härtung der Fügespaltmasse in dem Polymerbeutel 20 zu laden und auszuführen.

Das Handgerät 28 kann beispielsweise eine optoelektronischen Code auf dem Polymerbeutel 20 oder dem elektrischen Verbindungselement 23 scannen und somit die notwendigen Heizparameter ermitteln. Denkbar ist aber auch, dass eine andere drahtlose Kommunikationsmethode, wie bspw. NFC oder RFID verwendet wird, um die notwendigen Heizparameter zu ermitteln.

Dabei können die Heizparameter direkt an dem Polymerbeutel 20 kodiert sein. Denkbar ist aber auch, dass lediglich übergeordnete Informationen, wie bspw. das Material der Fügespaltmasse und/oder die Menge der Fügespaltmasse in dem Polymerbeutel 20 und/oder mögliche Abmessungen des zu erwartenden Fügespaltes kodiert werden, wobei das Handgerät 28 dann eingerichtet ist, aus diesen Informationen die notwendigen Heizparameter abzuleiten.

Nach Beendigung der Heizperiode scheidet das Handgerät 28 automatisch die Stromzufuhr zu der elektrischen Heizeinrichtung aus und gibt gegebenenfalls ein optisches und/oder akustisches Signal aus, um auf die Beendigung der Heizperiode hinzuweisen. Danach kann das Handgerät durchtrennen der elektrischen Verbindungsanordnung von dem ausgehärteten Fügespaltmasse 14 getrennt werden. Es ist denkbar, dass die elektrischen Leitungen 22 einer Sollbruchstelle aufweisen, beispielsweise durch eine Perforation, um auf das elektrische Verbindungselement 23 von dem Polymerbeutel 20 abzutrennen.

### Bezugszeichenliste

10 erstes Bauteil
10a ersten Fügefläche des ersten Bauteils
11 zweites Bauteil
11a zweite Fügefläche des zweiten Bauteils
12 Schrauben
13 Fügespalt
14 Fügespaltmasse
15 Vorderholm
16 Rippenaufnahme
17 Vorflügelrippe
18 Flügelkastenschale
19 Vorflügelschale
20 Polymerbeutel
21 Heizdraht
22 elektrische Leitungen
23 elektrisches Verbindungselement des Polymerbeutels
24 Fasermateriallagen/Hybridgelege
24a Heizdrahtträgerlage
25 Klebstoffschicht
26 Abdeckfolie
27 UV-Diode
28 Handgerät
29 elektrische Leitung des Handgerätes
30 elektrisches Verbindungselement des Handgerätes
31 Display
32 Bedienelemente
33 Cloudspeicher

## Patentansprüche

1. Verfahren zum Fügen von Bauteilen (10, 11) eines Luftfahrzeuges, wobei das Verfahren die folgenden Schritte umfasst:
- Bereitstellen eines ersten Bauteils (10) und eines zweiten Bauteils (11) des Luftfahrzeuges,
- Fügen des ersten Bauteils (10) und des zweiten Bauteils (11), wobei bauteilbedingt in einem Fügebereich ein zu erwartender Fügespalt (13) gebildet wird, und
- Auffüllen des gebildeten Fügespaltes (13) mit einer Fügespaltmasse (14),
**dadurch gekennzeichnet,**
- **dass** ein vorkonfektionierter Polymerbeutel (20) bereitgestellt ist, der mit der nicht-ausgehärteten Fügespaltmasse (14) gefüllt ist, wobei der Polymerbeutel (20) hinsichtlich der Abmessungen und/oder hinsichtlich der Menge der Fügespaltmasse (14) in Abhängigkeit von der erwarteten Größe des Fügespaltes (13) vorkonfektioniert bereitgestellt wird,
- **dass** dieser mit der nicht-ausgehärteten Fügespaltmasse (14) gefüllte Polymerbeutel (20) in den gebildeten Fügespalt (13) eingesetzt wird, und
- **dass** die Fügespaltmasse (14) in dem Polymerbeutel (20) anschließend ausgehärtet wird.

2. Verfahren nach Anspruch 1, **dadurch gekennzeichnet, dass** die in den Polymerbeutel (20) gefüllte Fügespaltmasse (14) eine im nicht-ausgehärteten Zustand flüssige, pastöse oder zumindest nicht-feste Füllmasse ist.

3. Verfahren nach Anspruch 1 oder 2, **dadurch gekennzeichnet, dass** die in den Polymerbeutel (20) gefüllte Fügespaltmasse (14) ein Duromerkunststoff ist, enthält oder aus einem solchen besteht und/oder dass der Polymerbeutel (20) einen Duromerkunststoff aufweist oder aus einem solchen gebildet ist.

4. Verfahren nach einem der vorhergehenden Ansprüche, **dadurch gekennzeichnet, dass** der Polymerbeutel (20) derart bereitgestellt wird, dass an der Außenseite des Polymerbeutels (20) zumindest teilweise eine Klebstoffschicht (25) angeordnet ist, die nach dem Aushärten der Fügespaltmasse (14) mit zumindest einem der Bauteile (10, 11) eine Klebstoffverbindung eingeht.

5. Verfahren nach einem der vorhergehenden Ansprüche, **dadurch gekennzeichnet, dass** der mit der Fügespaltmasse (14) gefüllte Polymerbeutel (20) nach dem Einsetzen in den Fügespalt (13) mittels einer elektrischen Heizeinrichtung temperiert wird, sodass die Fügespaltmasse (14) unter Einbringen von thermischer Energie aushärtet.

6. Verfahren nach Anspruch 5, **dadurch gekennzeichnet, dass** ein Polymerbeutel (20) mit mindestens einem Heizdraht (21) als Heizeinrichtung bereitgestellt wird, die mit einer elektrischen Energiequelle zur Bildung einer elektrische Widerstandsheizeinrichtung verbunden wird, um die in dem Polymerbeutel (20) enthaltene Fügespaltmasse (14) zu temperieren, sodass die Fügespaltmasse (14) unter Einbringen von thermischer Energie aushärtet.

7. Verfahren nach Anspruch 6, **dadurch gekennzeichnet, dass** der Polymerbeutel (20) derart bereitgestellt wird, dass der mindestens eine Heizdraht (21) in der in dem Polymerbeutel (20) befindlichen Fügespaltmasse (14) eingebettet ist und nach dem Aushärten der Fügespaltmasse (14) eingebettet in dieser verbleibt.

8. Verfahren nach Anspruch 6 oder 7, **dadurch gekennzeichnet, dass** der Polymerbeutel (20) derart bereitgestellt wird, dass der mindestens eine Heizdraht (21) in oder an dem Material des Polymerbeutels (20) selbst vorgesehen ist und nach dem Aushärten der Fügespaltmasse (14) in oder an dem Polymerbeutel (20) verbleibt.

9. Verfahren nach einem der Ansprüche 5 bis 8, **dadurch gekennzeichnet, dass** die Heizeinrichtung über einen Stecker mit einem Handgerät (28) verbunden ist oder wird, wobei das Handgerät (28) durch Steuerung des elektrischen Stromflusses in der elektrischen Heizeinrichtung den Energieeintrag in die Fügespaltmasse (14) einstellt.

10. Verfahren nach einem der Ansprüche 5 bis 7, **dadurch gekennzeichnet, dass** in dem Polymerbeutel (20) eine Heizdrahtträgerlage (24a) zur Stützung des Heizdrahtes (21) vorgesehen ist.

11. Verfahren nach einem der vorhergehenden Ansprüche, **dadurch gekennzeichnet, dass** ein Polymerbeutel (20) mit mindestens einer UV-Diode (27) bereitgestellt wird, die mit einer elektrischen Energiequelle zum Aussenden von UV-Licht verbunden wird, um die in dem Polymerbeutel (20) enthaltene Fügespaltmasse (14) durch Einwirkung des ausgesendeten UV-Lichts auszuhärten.

12. Verfahren nach Anspruch 11, **dadurch gekennzeichnet, dass** der Polymerbeutel (20) derart bereitgestellt wird, dass die mindestens eine UV-Diode (27) in der in dem Polymerbeutel (20) befindlichen Fügespaltmasse (14) eingebettet ist und nach dem Aushärten der Fügespaltmasse (14) eingebettet in dieser verbleibt.

13. Verfahren nach einem der vorhergehenden Ansprüche, **dadurch gekennzeichnet, dass** der Polymerbeutel (20) derart bereitgestellt wird, dass mindestens eine Fasermateriallage (24) in dem Polymerbeutel (20) zusammen mit der Fügespaltmasse (14) vorgesehen ist.

14. Luftfahrzeug, bei dem mindestens zwei Bauteile (10, 11) gemäß dem vorstehend beschriebenen Verfahren miteinander gefügt wurden.
